# EUROPEAN PATENT APPLICATION

(11) **EP 4 851 734 A1**
(43) Date of publication of application: **09.12.2026**
(21) Application number: 26180665.7
(22) Date of filing: 22.05.2026
(51) Int. Cl.: G05B 19/042, G05B 19/05, G06F 8/34, G06F 8/36, G06F 11/30

(54) **SYSTEMS AND METHODS FOR IMPORTING AND GENERATING TAGS**

(30) Priority: 05.06.2025 US 202519229672
(71) Applicant: Rockwell Automation Technologies, Inc., Mayfield Heights, OH 44124 (US)
(72) Inventor: Rolandone, Fabio, Mayfield Heights, OH, 44124 (US); Bennati, Luca, Mayfield Heights, OH, 44124 (US); Ognissanti, Andrea, Mayfield Heights, OH, 44124 (US); Brocca, Tommaso, Mayfield Heights, OH, 44124 (US)
(74) Representative: Grünecker Patent- und Rechtsanwälte PartG mbB

(57) **Abstract**

A non-transitory, tangible, computer readable medium comprising instructions that, when executed by processing circuitry, causes the processing circuitry to perform operations including receiving a project file associated with a controller that is configured to execute the project file to control operations of one or more industrial automation components within the industrial automation system, extracting one or more variables from the project file based on one or more industrial automation standards, importing one or more tags into an industrial automation application based on the one or more variables, and generating a visualization of the industrial automation system via the industrial automation application, where the visualization comprises one or more objects defined using the one or more tags.

## Description

### BACKGROUND

The present disclosure relates generally to automation control and monitoring systems. More specifically, the present disclosure relates to techniques for importing and generating tags for generating visualizations of industrial automation systems and processes.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A tag is a text-based name for an area of a component's memory in which specific data is stored. As such, creating a tag is somewhat like creating a partition within the memory of the component. Thus, tags may be generated and utilized within an industrial automation project file as a mechanism for allocating memory of components within a respective industrial automation system. For example, tags may be created to allocate memory of a controller within an industrial automation system and may be utilized within a design time environment of an industrial automation software application to generate or modify a project file executable by the controller to cause one or more devices within the industrial automation system to perform an industrial automation process. Additionally, the tags may be utilized to generate visualizations of the industrial automation system based on data accessible by the controller (e.g., sensor data) within a run time environment of the software application.

Tags may be defined by a user within a software application for generating industrial automation project files and/or visualizations. Additionally, or alternatively, the software application may include a tag importer feature to allow the user to automatically import tags from components within an industrial automation system (e.g., from programmatic code associated with the components). Unfortunately, different components within the industrial automation system may utilize different programming languages and/or communication protocols, some of which may not be supported by the software's tag importer feature. Additionally, the components may utilize complex data types, such as user defined data types (UDTs), that may not be supported by the software's tag importer feature. Accordingly, it may be desirable to develop improved techniques for importing and generating tags.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In certain embodiments, a non-transitory, tangible, computer readable medium includes instructions that, when executed by processing circuitry, causes the processing circuitry to perform operations that include receiving a project file associated with a controller of an industrial automation system, where the controller is configured to execute the project file to control operations of one or more industrial automation components within the industrial automation system. The operations further include extracting one or more variables from the project file based on one or more industrial automation standards, importing one or more tags into an industrial automation application based on the one or more variables, and generating, via the industrial automation application, a visualization of the industrial automation system. The visualization may include one or more objects defined using the one or more tags.

In another embodiment, a method includes receiving a project file configured to control one or more industrial automation devices within an industrial automation system, extracting one or more variables from the project file based on one or more industrial automation standards, and importing one or more tags into an industrial automation application based on the one or more variables, where the industrial automation application is configured to generate a visualization of the industrial automation system with the one or more tags.

In another embodiment, a non-transitory, tangible, computer readable medium includes instructions that, when executed by processing circuitry, causes the processing circuitry to perform operations that include receiving a project file configured to control one or more industrial automation devices within an industrial automation system, extracting one or more variables from the project file based on one or more industrial automation standards, where the one or more variables are associated with configuration parameters of the one or more industrial automation devices, and importing one or more tags into an industrial automation application based on the one or more variables. The operations further include generating, via a graphical user interface (GUI) associated with the industrial automation application, a visualization of the industrial automation system based on the one or more tags.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic view of an operation technology (OT) environment, in accordance with an embodiment;
FIG. 2 is a block diagram of example components that could be used in the industrial automation system of FIG. 1, in accordance with an embodiment;
FIG. 3 is a perspective view of an industrial automation system as an example of the OT environment of FIG. 1, in accordance with an embodiment;
FIG. 4 is a screenshot of a start window of an integrated development environment (IDE) of an industrial automation software package capable of importing and generating tags for the industrial automation systems of FIGS. 1 and 3, in accordance with aspects of the present disclosure;
FIG. 5 is a screenshot of an explorer window of the IDE of FIG. 4 with a nested listing of communication protocols, in accordance with aspects of the present disclosure;
FIG. 6 is a screenshot of the explorer window when a user adds a new controller object, in accordance with aspects of the present disclosure;
FIG. 7 is a screenshot of the IDE when a user selects an option to execute a tag importer feature from the explorer window, in accordance with aspects of the present disclosure;
FIG. 8 is a screenshot of the IDE when tags are imported and/or generated by the tag importer feature, in accordance with aspects of the present disclosure;
FIG. 9 is a screenshot of a listing of tags within the explorer window of the IDE and an associated screenshot of the properties window of the IDE when a user selects a tag from the listing of tags, in accordance with aspects of the present disclosure;
FIG. 10 is a screenshot of a main window of the IDE for generating user interface visualizations of an industrial automation system or process, in accordance with aspects of the present disclosure; and
FIG. 11 illustrates a flow chart of a process for importing and/or generating tags by leveraging PLCopen standards.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

As used herein, the term "computing system" refers to an electronic computing device such as, but not limited to, a single computer, virtual machine, virtual container, host, server, edge device, laptop, tablet, and/or mobile device, or to a plurality of electronic computing devices working together to perform the function described as being performed on or by the computing system. As used herein, the term "medium" refers to one or more non-transitory, computer-readable physical media that together store the contents described as being stored thereon. Embodiments may include nonvolatile secondary storage, read-only memory (ROM), and/or random-access memory (RAM). As used herein, the term "application" refers to one or more computing modules, programs, processes, workloads, threads and/or a set of computing instructions executed by a computing system. Example embodiments of an application include software modules, software objects, software instances and/or other types of executable code.

The present disclosure is directed towards techniques for importing and generating tags for use within industrial automation projects. For example, the disclosed techniques may leverage industrial automation standards (e.g., PLCopen standard, IEC 61131-3, etc.) to extract variables from an XML file associated with a component of an industrial automation system.

As discussed above, a tag is a text-based name for an area of a component's memory in which specific data is stored. Thus, tags may be used within industrial automation software applications to design and monitor industrial automation systems based on data accessible to respective components within the industrial automation systems. For example, a user may utilize tags associated with a controller of an industrial automation system to generate visualizations of the industrial automation system (e.g., HMI screens, digital gauges, etc.) based on runtime data accessible to the controller (e.g., sensor data stored within a memory of the controller). Users may manually define tags within an industrial automation software application. Additionally, or alternatively, the industrial automation software application may include a tag importer feature to automatically import tags from components within an industrial automation system. Unfortunately, different components within the industrial automation system may utilize different programming languages and/or communication protocols, some of which may not be supported by the software's tag importer feature.

For example, the industrial automation system may include multiple programmable logic controllers (PLCs) associated with different manufacturers that may each use manufacturer-specific programming languages to define their respective programmatic code. The tag importer feature of the industrial automation system may be compatible with a subset of the manufacturer-specific programming languages, and thus, may be unable to reliably import tags from controllers associated with manufacturer-specific programming languages outside of the subset of supported manufacturer-specific programming languages. Accordingly, users may manually define tags associated with the controllers that are not supported by the tag importer feature. Unfortunately, manually defining tags may be a time consuming and error-prone process. Additionally, users may be unable to generate tags that capture complex data structures and relationships between variables within the programmatic code.

The disclosed techniques leverage industrial automation standards (e.g., PLCopen standards, IEC 611313-3, etc.) to automatically import or generate tags based on variables defined within project files associated with one or more components of an industrial automation system. For example, systems and methods of the present disclosure may leverage PLCopen standards that capture similarities across common manufacturer-specific programming languages (e.g., similar syntax, similar naming conventions, similar preferences for syntax and semantics, etc.). The disclosed techniques may involve retrieving a project file (e.g., PLCopen standard XML file) associated with a component of an industrial automation system, reading or loading the project file into a memory of the system (e.g., transforming the text file into machine-readable binary data), extracting variables from the project file based on one or more industrial automation standards, and importing or generating (e.g., reconstructing) tags based on the extracted variables into a software application associated with monitoring and/or designing the industrial automation system. The user may utilize the tags within the software application to create an industrial automation project file and/or visualization, as well as modify existing industrial automation project files and/or visualizations. The system may allow users to import (e.g., automatically generate) tags with complex data types (e.g., user defined data types), as well as import tags from components regardless of their manufacturer. Accordingly, by leveraging industrial automation standards, the presently disclosed techniques may provide a standardized method for importing tags from industrial automation components regardless of the manufacturer and/or programming language associated with the components, while reducing operator intervention and human error within the tag generation process.

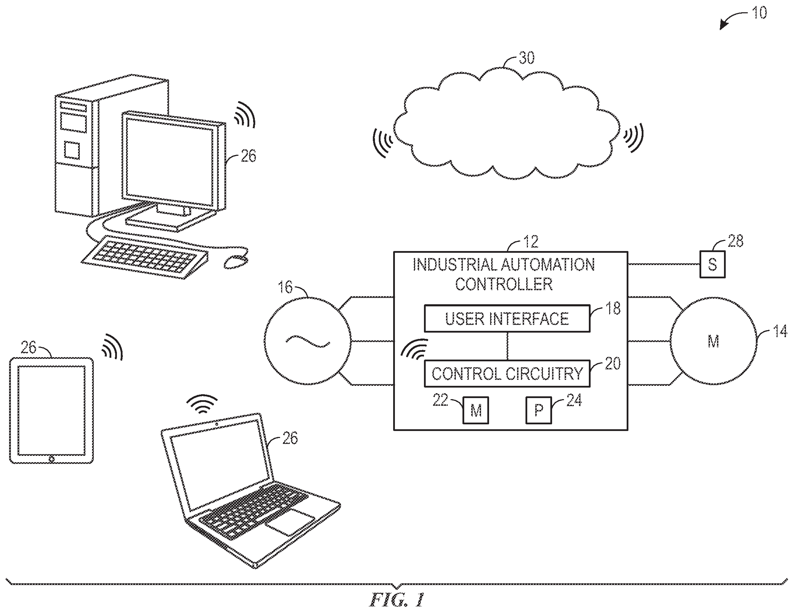

By way of introduction, FIG. 1 is a schematic view of an example operation technology (OT) environment 10 in which the embodiments described herein may be implemented. As shown, the OT environment 10 is an industrial automation system that includes a controller 12 (e.g., programmable logic controller) and an actuator 14 (e.g., a motor). The OT environment 10 may also include, or be coupled to, a power source 16. The power source 16 may include a generator, an external power grid, a battery, or some other source of power. The controller 12 may be a stand-alone control unit that controls multiple industrial automation components (e.g., a plurality of motors 14), a controller 12 that controls the operation of a single automation component (e.g., motor 14), or a subcomponent within a larger OT environment 10. In the instant embodiment, the controller 12 includes a user interface 18, such as a human machine interface (HMI), and control circuitry 20 which may include a memory 22 and a processor 24. The controller 12 may include a cabinet or some other enclosure for housing various components of the OT environment 10, such as a motor starter, a disconnect switch, etc.

The control circuitry 20 may be programmed (e.g., via computer readable code or instructions stored on the memory 22, such as a non-transitory computer readable medium, and executable by the processor 24) to provide signals for controlling the motor 14. In certain embodiments, the control circuitry 20 may be programmed according to a specific configuration desired for a particular application. For example, the control circuitry 20 may be programmed to respond to external inputs, such as reference signals, alarms, command/status signals, etc. The external inputs may originate from one or more relays or other electronic devices. The programming of the control circuitry 20 may be accomplished through software or firmware code that may be loaded onto the internal memory 22 of the control circuitry 20 (e.g., via a locally or remotely located computing device 26) or programmed via the user interface 18 of the controller 12. The control circuitry 20 may respond to a set of operating parameters. The settings of the various operating parameters may determine the operating characteristics of the controller 12. For example, various operating parameters may determine the speed or torque of the motor 14 or may determine how the controller 12 responds to the various external inputs. As such, the operating parameters may be used to map control variables within the controller 12 or to control other devices communicatively coupled to the controller 12. These variables may include, for example, speed presets, feedback types and values, computational gains and variables, algorithm adjustments, status and feedback variables, programmable logic controller (PLC) control programming, and the like

In some embodiments, the controller 12 may be communicatively coupled to one or more sensors 28 for detecting operating temperatures, voltages, currents, pressures, flow rates, and other measurable variables associated with the OT environment 10. With feedback data from the sensors 28, the control circuitry 20 may keep detailed track of the various conditions under which the OT environment 10 may be operating. For example, the feedback data may include conditions such as actual motor speed, voltage, frequency, power quality, alarm conditions, etc. In some embodiments, the feedback data may be communicated back to the computing device 26 for additional analysis.

The computing device 26 may be communicatively coupled to the controller 12 via a wired or wireless connection. The computing device 26 may receive inputs from a user defining an industrial automation project using a native application running on the computing device 26 or using a website accessible via a browser application, a software application, or the like. The user may define the industrial automation project by writing code, interacting with a visual programming interface, inputting or selecting values via a graphical user interface, or providing some other inputs. The user may use licensed software and/or subscription services to create, analyze, and otherwise develop the project. The computing device 26 may send a project to the controller 12 for execution. Execution of the industrial automation project causes the controller 12 to control components (e.g., motor 14) within the OT environment 10 through performance of one or more tasks and/or processes. In some applications, the controller 12 may be communicatively positioned in a private network and/or behind a firewall, such that the controller 12 does not have communication access outside a local network and is not in communication with any devices outside the firewall, other than the computing device 26 The controller 12 may collect feedback data during execution of the project, and the feedback data may be provided back to the computing device 26 for analysis. Feedback data may include, for example, one or more execution times, one or more alerts, one or more error messages, one or more alarm conditions, one or more temperatures, one or more pressures, one or more flow rates, one or more motor speeds, one or more voltages, one or more frequencies, and so forth. The project may be updated via the computing device 26 based on the analysis of the feedback data.

The computing device 26 may be communicatively coupled to a cloud server 30 or remote server via the internet, or some other network. In one embodiment, the cloud server 30 may be operated by the manufacturer of the controller 12, a software provider, a seller of the controller 12, a service provider, operator of the controller 12, owner of the controller 12, etc. The cloud server 30 may be used to help customers create and/or modify projects, to help troubleshoot any problems that may arise with the controller 12, develop policies, or to provide other services (e.g., project analysis, enabling, restricting capabilities of the controller 12, data analysis, controller firmware updates, etc.). The remote/cloud server 30 may be one or more servers operated by the manufacturer, software provider, seller, service provider, operator, or owner of the controller 12. The remote/cloud server 30 may be disposed at a facility owned and/or operated by the manufacturer, software provider, seller, service provider, operator, or owner of the controller 12. In other embodiments, the remote/cloud server 30 may be disposed in a datacenter in which the manufacturer, software provider, seller, service provider, operator, or owner of the controller 12 owns or rents server space. In further embodiments, the remote/cloud server 30 may include multiple servers operating in one or more data center to provide a cloud computing environment.

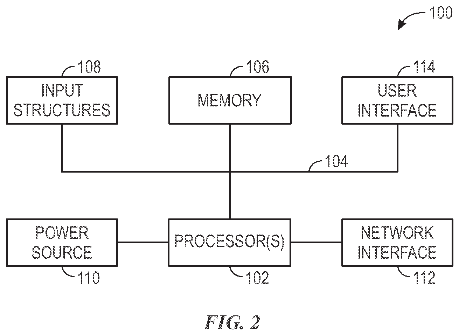

FIG. 2 illustrates a block diagram of example components of a computing device 100 that could be used as the computing device 26, the cloud/remote server 30, the controller 12, or some other device provided by the present disclosure. As used herein, the computing device 100 may be implemented as one or more computing systems including laptop, notebook, desktop, tablet, HMI, or workstation computers, as well as server type devices or portable, communication type devices, such as cellular telephones and/or other suitable computing devices.

As illustrated, the computing device 100 may include various hardware components, such as one or more processors 102, one or more buses 104, memory 106, input structures 108, a power source 110, a network interface 112, a user interface 114, and/or other computer components useful in performing the functions described herein.

The one or more processors 102 may include, in certain implementations, microprocessors configured to execute instructions stored in the memory 106 or other accessible locations. Alternatively, the one or more processors 102 may be implemented as application-specific integrated circuits (ASICs), field-programmable gate arrays (FPGAs), and/or other devices designed to perform functions discussed herein in a dedicated manner. As will be appreciated, multiple processors 102 or processing components may be used to perform functions discussed herein in a distributed or parallel manner.

The memory 106 may encompass any tangible, non-transitory medium for storing data or executable routines. Although shown for convenience as a single block in FIG. 2, the memory 106 may encompass various discrete media in the same or different physical locations. The one or more processors 102 may access data in the memory 106 via one or more buses 104.

The input structures 108 may allow a user to input data and/or commands to the device 100 and may include mice, touchpads, touchscreens, keyboards, controllers, and so forth. The power source 110 can be any suitable source for providing power to the various components of the computing device 100, including line and battery power. In the depicted example, the device 100 includes a network interface 112. Such a network interface 112 may allow communication with other devices on a network using one or more communication protocols. In the depicted example, the device 100 includes a user interface 114, such as a display that may display images or data provided by the one or more processors 102. The user interface 114 may include, for example, a monitor, a display, and so forth. As will be appreciated, in a real-world context a processor-based system, such as the computing device 100 of FIG. 2, may be employed to implement some or all of the present approach, such as performing the functions of the controller, the computing device 26, and/or the cloud/remote server 30 shown in FIG. 1, as well as other memory-containing devices.

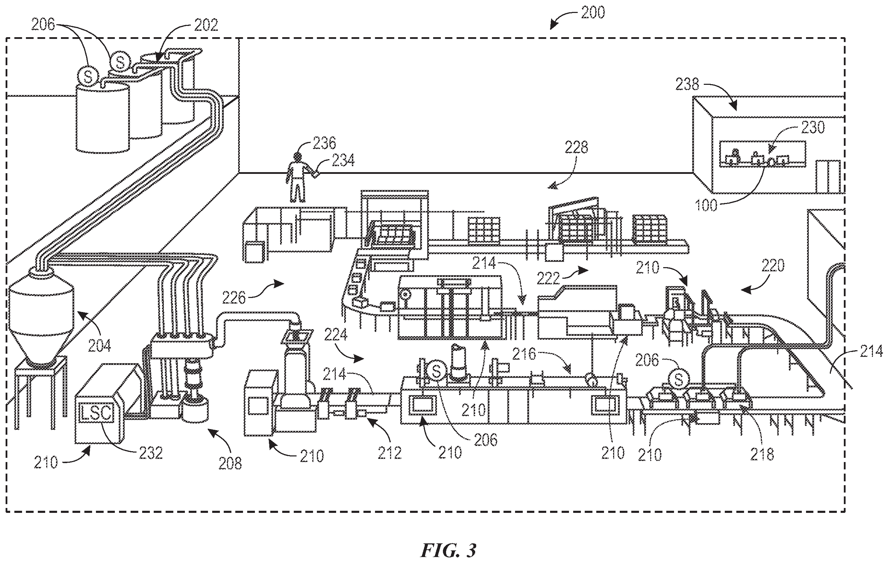

FIG. 3 is a perspective view of an example industrial automation system 200 employed by a food manufacturer. It should be noted that although the example industrial automation system 200 of FIG. 3 is directed at a food manufacturer, the present embodiments described herein may be employed within any suitable industry, such as automotive, cosmetics, chemical manufacturing/processing, mining, hydrocarbon production, manufacturing, and the like. The following brief description of the example industrial automation system 200 employed by the food manufacturer is provided herein to help facilitate a more comprehensive understanding of the OT environment to which the techniques described herein may be applied. As such, the embodiments described herein should not be limited to being applied to the example depicted in FIG. 3.

The example industrial automation system 200 for a food manufacturer may include any number of machines, such as silos 202 and tanks 204. The silos 202 and the tanks 204 may store different types of raw material, such as grains, salt, yeast, sweeteners, flavoring agents, coloring agents, vitamins, minerals, and preservatives. In some embodiments, sensors 206 may be positioned within or around the silos 202, the tanks 204, or other suitable locations within the industrial automation system 200 to measure certain properties, such as temperature, mass, volume, pressure humidity, and the like.

The raw materials may be provided to a mixer 208, which may mix the raw materials together according to a specified ratio. The mixer 208 and other machines in the industrial automation system 200 may employ certain industrial automation devices 210 to control the operations of the mixer 208 and other machines. The industrial automation devices 210 may include controllers (e.g., industrial automation controller 12), input/output (I/O) modules, motor control centers (e.g., control system or control circuitry 20), motors (e.g., actuator 14), human-machine interfaces (e.g., user interface 18), operator interfaces, contactors, starters, sensors (e.g., sensor 28, sensors 206), conveyors, drives, relays, protection devices, switchgear, compressors, firewall, network switches (e.g., Ethernet switches, modular-managed, fixed-managed, service-router, industrial, unmanaged, etc.) and the like.

The mixer 208 may provide a mixed compound to a depositor 212, which may deposit a certain amount of the mixed compound onto conveyor 214. The depositor 212 may deposit the mixed compound on the conveyor 214 according to a shape and amount that may be specified to a control system for the depositor 212. The conveyor 214 may be any suitable conveyor system that transports items to various types of machinery across the industrial automation system 200. For example, the conveyor 214 may transport deposited material from the depositor 212 to an oven 216, which may bake the deposited material. The baked material may be transported to a cooling tunnel 218 to cool the baked material, such that the cooled material may be transported to a tray loader 220 via the conveyor 214. The tray loader 220 may include machinery that receives a certain amount of the cooled material for packaging. By way of example, the tray loader 220 may receive 25 ounces of the cooled material, which may correspond to an amount of cereal provided in a cereal box.

A tray wrapper 222 may receive a collected amount of cooled material from the tray loader 220 into a bag, which may be sealed. The tray wrapper 222 may receive the collected amount of cooled material in a bag and seal the bag using appropriate machinery. The conveyor 214 may transport the bagged material to case packer 224, which may package the bagged material into a box. The boxes may be transported to a palletizer 226, which may stack a certain number of boxes on a pallet that may be lifted using a forklift or the like. The stacked boxes may then be transported to a shrink wrapper 228, which may wrap the stacked boxes with shrink-wrap to keep the stacked boxes together while on the pallet. The shrink-wrapped boxes may then be transported to storage or the like via a forklift or other suitable transport vehicle.

To perform the operations of each of the devices in the example industrial automation system 200, the industrial automation devices 210 may be used to provide power to the machinery used to perform certain tasks, provide protection to the machinery from electrical surges, prevent injuries from occurring with human operators in the industrial automation system 200, monitor the operations of the respective device, communicate data regarding the respective device to a supervisory control system 230, and the like. In some embodiments, each industrial automation device 210 or a group of industrial automation devices 210 may be controlled using a local control system 232. The local control system 232 may receive data regarding the operation of the respective industrial automation device 210, other industrial automation devices 210, user inputs, and other suitable inputs to control the operations of the respective industrial automation devices 210.

An operator device 234 is an example of the computing device 26 that enables an operator 236 to access or interface with other industrial automation devices 210 and/or computing devices. For example, the operator device 234 may include the processor 102, buses 104, memory 106, input structures 108, power source 110, network interface 112, and user interface 114.

Collectively, any or all of the machines (e.g., mixer 208, palletizer 226), the industrial automation devices 210, the computing devices 26, the cloud server 30, the supervisory control system 230, and any other elements of FIG. 3 may constitute the OT environment. These elements may communicate across the OT environment via a network (e.g., a local area network (LAN)). In some embodiments, the network may be managed from a network operations center (NOC) 238. The NOC 238 is a centralized location from which a network administrator may monitor and manage the network. For example, the NOC 238 may include a central computing system which executes a network security system, monitors traffic into and out of the network, maintains databases, and manages security policies. As shown, the NOC 238 is local to the industrial automation system 200, but in other embodiments, the NOC 238 may be located at a remote location.

During operation of the industrial automation system 200, each industrial automation device 210 or a group of industrial automation devices 210 may be controlled according to one or more industrial automation projects executed by the supervisory control system 230 and/or the local control system 232. As discussed above, users may define the one or more industrial automation projects using an authoring tool, such as a native application running on a suitable computing device (e.g., computing device 26, computing device 100) or a website accessible via a browser application, a software application, or the like. The industrial automation projects may include tags and/or include variables and parameters that may be used to generate and import tags for use within another industrial automation project or software application for monitoring and/or designing the industrial automation system 200. The users may manually define the tags within the industrial automation projections or may automatically import tags from the associated controllers (e.g., supervisory control system 230, local control system 232) within the authoring tool/software application. Unfortunately, manually defining tags may be a time consuming and error-prone process. Additionally, the users may be unable to generate tags that capture complex data structures and relationships between variables within the programmatic code. Further, automatic methods for generating or importing tags may not be compatible with the programming languages associated with the respective controllers. For example, the authoring tool/software application may be associated with a specific manufacturer or supplier of programmable logic controllers (PLCs) and may be unable to accurately or effectively import tags from a controller associated with a different manufacturer or supplier.

Accordingly, the present disclosure is directed towards techniques for importing and generating tags for use within industrial automation projects. Specifically, the disclosed techniques may leverage industrial automation standards (e.g., PLCopen standard, IEC 61131-3, etc.) to extract variables from an XML file associated with a component of an industrial automation system (e.g., industrial automation system 200). For example, systems and methods of the present disclosure may leverage PLCopen standards that capture similarities across common manufacturer-specific programming languages (e.g., shared syntax, shared naming conventions, etc.). The systems and methods may retrieve a project file (e.g., PLCopen standard XML file) associated with a component of an industrial automation system, extract variables from the project file based on one or more industrial automation standards (e.g., PLCopen standard, IEC 61131-3, etc.), and generate tags based on the extracted variables for use within a software application associated with monitoring and/or designing the industrial automation system. Users may utilize the tags within the software application to create an industrial automation project file and/or visualization, as well as to modify existing industrial automation project files and/or visualizations. The presently disclosed techniques may allow users to import (e.g., automatically generate) tags with complex data types (e.g., user defined data types), as well as import tags from components regardless of their manufacturer. Accordingly, by leveraging industrial automation standards, the presently disclosed techniques may provide a standardized method for importing tags from industrial automation components regardless of the manufacturer and/or programming language associated with the components, while reducing operator intervention and human error within the tag generation process.

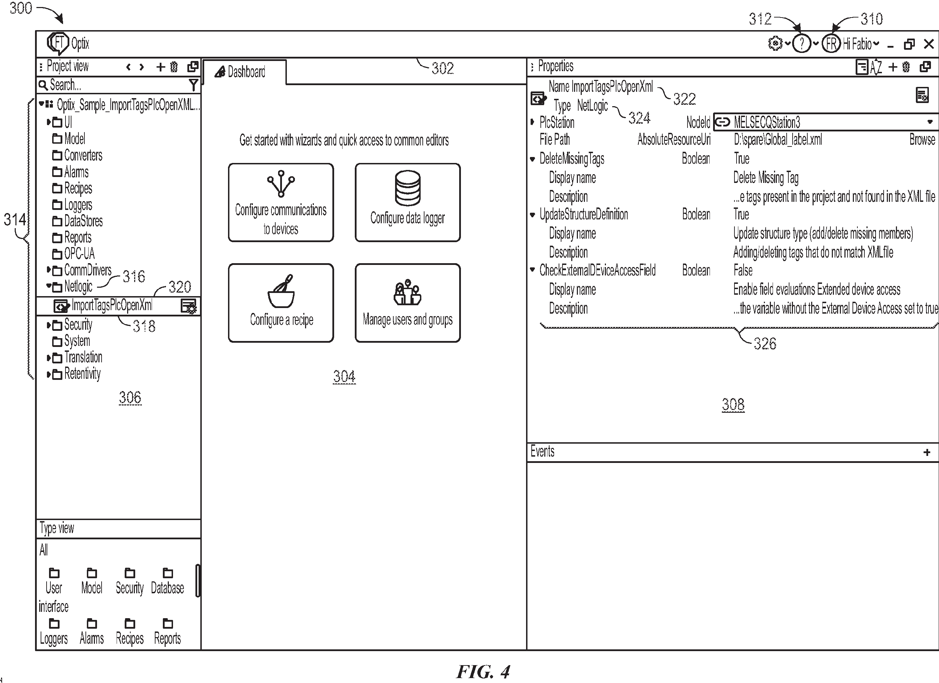

With the foregoing in mind, FIG. 4 is a screenshot of an integrated development environment (IDE) 300 of an industrial automation software package, accessible via a web browser or running as a native application, that is capable of importing and generating tags according to the presently disclosed techniques. The IDE 300 may include a horizontal information bar 302, a primary window 304, an explorer window 306 along a left side of the primary window 304, and a properties window 308 along a right side of the primary window 304. As shown, the horizontal information bar 302 may include indications of the industrial automation software package (e.g., a name of the software package) and the current or open project file (e.g., a name and/or file location of the open project file) on one end (e.g., left side) and selectable drop-down menus for an organization or user profile 310 and a help feature 312 on an opposite end (e.g., right side). When the drop-down menu for the help feature 312 is selected, the IDE 300 may present options to allow a user to contact live support, view information regarding features of the IDE 300, provide feedback, or otherwise help the user navigate the IDE 300. While other aspects of the IDE 300 may change as different options or buttons within the primary window 304 and/or the explorer window 306 are selected, the horizontal information bar 302 remains mostly constant during use of the IDE 300.

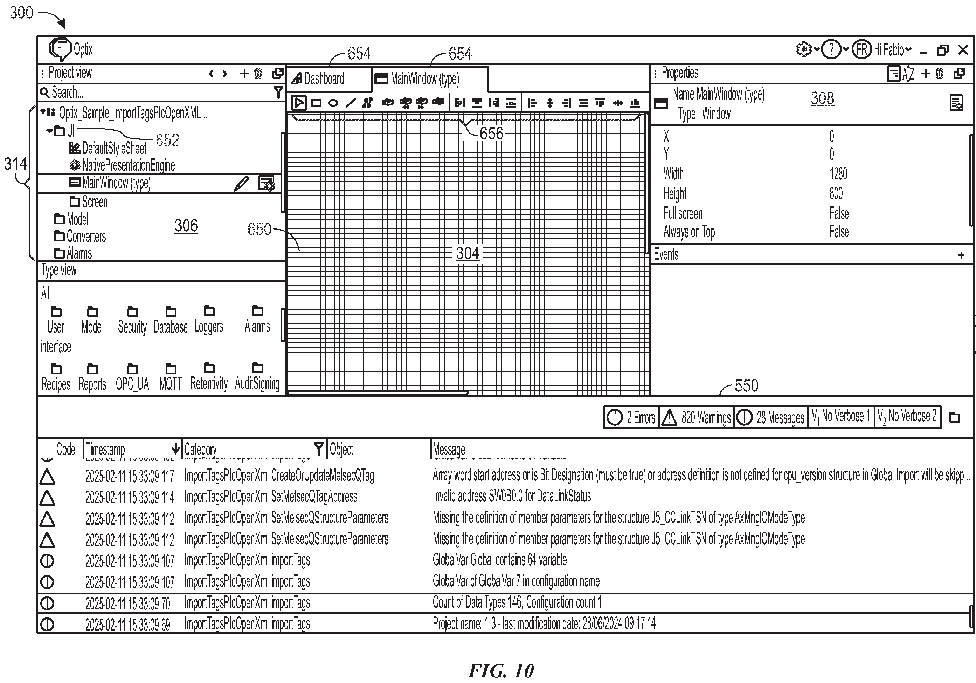

As shown in FIG. 4, the primary window 304 may display a navigation or quick start window with selectable options for a user to access commonly used features of the industrial automation software package associated with the IDE 300, such as options to configure communications to devices, configure a data logger, configure a recipe, and manage users and groups. As discussed in more detail below with regards to FIG. 10, the primary window 304 may update to display a window for designing visualizations of an industrial automation (e.g., HMI screens).

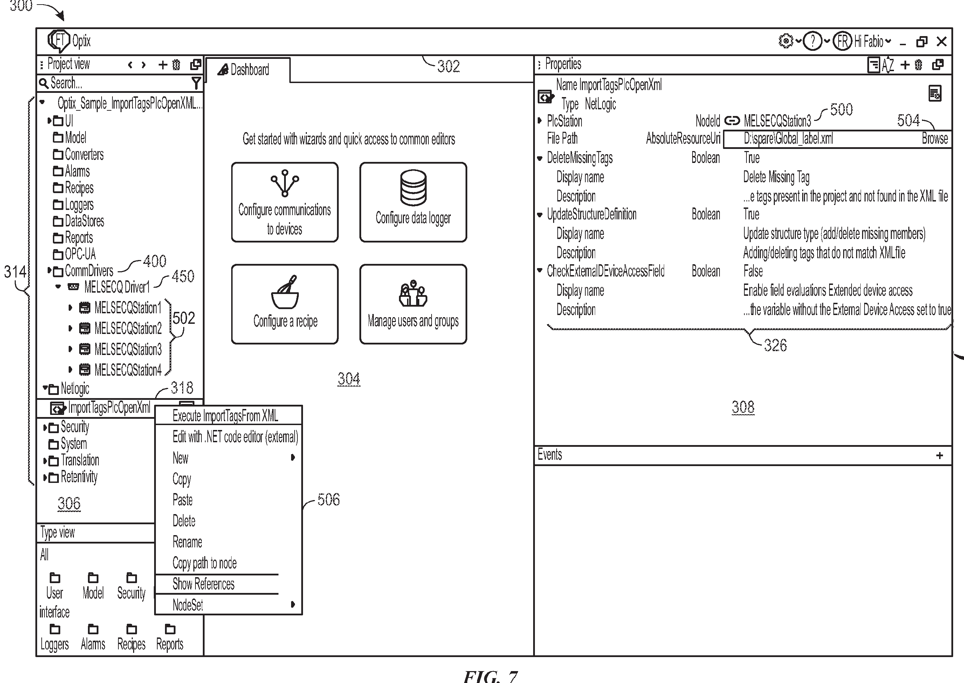

The explorer window 306 may include a nested listing 314 of options to create, edit, configure, and/or display different portions and/or features of the current project file. For example, as shown in FIG. 4, when a user selects a NetLogic option 316 from the listing 314, the Netlogic option 316 may expand and display one or more script objects (e.g., .NET code) that are associated with the project, such as a tag importer 318 which will be described in further detail below with regards to FIGS. 7-10. The explorer window 306 may include an indication 320 of the currently selected field within the listing 314. The indication 320 may highlight the selected field using a colored bar over the field, bolded text, or any other suitable method to emphasize the selected field.

When a user selects a field from the listing 314 of the explorer window 306, the properties window 308 may update to display properties of the selected field or object. For example, when the user selects the tag importer 318 object from the listing 314, the properties window 308 may update to display properties of the tag importer 318. As shown, the displayed properties may include an indication of the name 322 of the selected field (e.g., "ImportTagsPLCOpenXml"), an indication of the type 324 of the selected field (e.g., "Netlogic," another name of the expandable options from the listing 314, etc.), and rows of descriptions or additional information 326 regarding the selected field. When the selected field is a script object from the Netlogic option 316, such as the tag importer 318, the rows of description or additional information 326 may include a file path associated with the script corresponding to the script object and one or more additional execution commands associated with running the script. As shown, the tag importer 318 may include additional execution commands defining how the tag importer feature should resolve conflicts between previously imported tags and updated or new tags imported from the same industrial automation component, as discussed in greater detail below regarding FIG. 7. Users may be able to modify (e.g., update, delete, add) the rows of description additional information 326 from the properties window 308, thereby modifying features of the selected field. For example, users may be able to edit, remove, or add additional execution commands, select or update the file path location of the corresponding script, and the like.

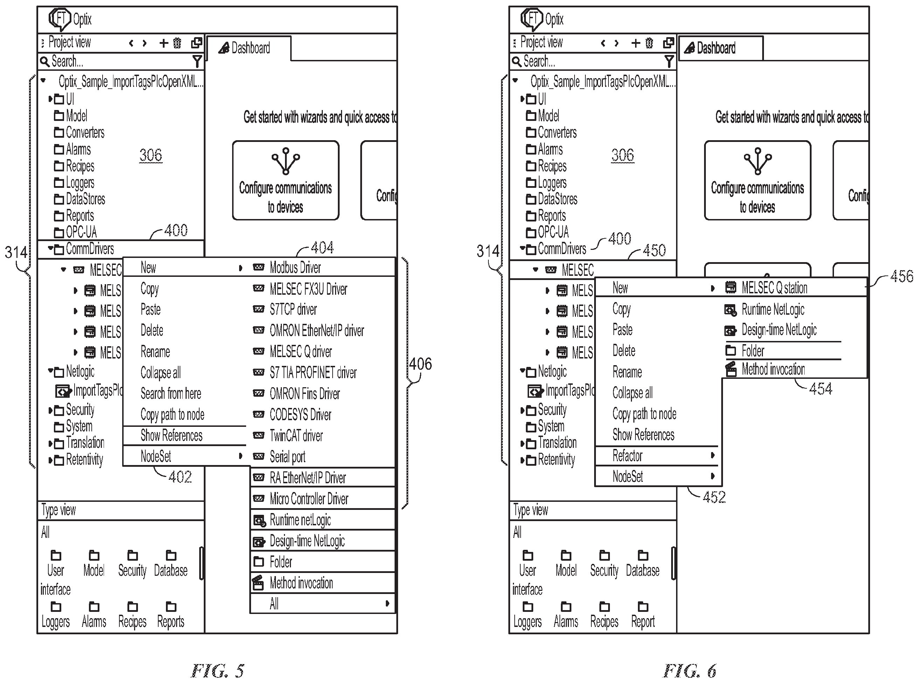

The tag importer 318 may allow users to automatically import tags from an industrial automation component, such as a programmable logic controller (PLC), into the current project. Before executing the tag importer 318 script object, a user may add an object representing an industrial automation component to the current project. For example, as shown in FIGS. 5 and 6, a user may add a controller object to the current project, which may establish communications between the current project and a controller within the industrial automation system being modeled by the current project corresponding to the controller object.

FIG. 5 is a screenshot of the explorer window 306 when a user selects (e.g., clicks, right clicks, taps, etc.) a communication driver ("CommDrivers") option 400 from the listing 314. As shown, selecting the communication driver option 400 may cause a configuration pop-up window 402 to display within the IDE 300. The configuration pop-up window 402 may include selectable options to modify the contents or display qualities of the communication driver option 400. For example, when a user selects "New" from the configuration pop-up window 402, the IDE 300 may display an additional pop-up window 404 along a right side of the configuration pop-up window 402. The additional pop-up window 404 may allow the user to select a new communication driver object from a listing 406 of communication driver objects to add to the project. The communication driver objects may represent communication protocols used by one or more industrial automation devices within the industrial automation system being modeled and/or designed. The listing 406 may include manufacturer-specific communication protocols that are specific to devices produced by respective manufacturers, as well as communication protocols that are used across device manufacturers. The explorer window 306 may organize controller objects within the current project in the listing 314 according to the communication protocols used to define the programmable code executed by the controllers corresponding to the controller objects. Accordingly, once a user selects a communication driver object (e.g., "MELSEC Q driver") to add to the project from the listing 406, the listing 314 may update to include the communication driver object within a collapsable listing of the communication driver option 400.

FIG. 6 is a screenshot of the explorer window 306 when a user selects (e.g., clicks, right clicks, taps, etc.) a communication driver object ("MELSECQDriver1") 450 from the listing 314. As shown, selecting the communication driver object 450 may cause a configuration pop-up window 452 to display within the IDE 300. The configuration pop-up window 452 may include substantially the same selectable options to modify the contents or display qualities of the communication driver object 450 as the configuration pop-up window 402 provides to modify the contents or display qualities of the communication driver option 400. For example, when a user selects "New" from the configuration pop-up window 452, the IDE 300 may display an additional pop-up window 454 along a right side of the configuration pop-up window 452. The additional pop-up window 454 may allow the user to select a new controller object from a listing 456 of controller objects to add to the project. The controller objects may represent and correspond to physical controllers that utilize the communication protocol represented by the communication driver object 450 within the industrial automation system being modeled and/or designed within the project. While FIG. 6 displays one potential controller object within the listing 456 of controller objects, the listing 456 may include additional potential controller objects (e.g., when multiple different models, classes, etc. of controllers utilizing the communication protocol are available). When the user selects a controller object (e.g., "MELSEC Q station") from the listing 456, the explorer window 306 may update to include the controller object beneath the communication driver object 450 in a collapsable nested listing of the communication driver option 400. Additionally, as discussed above, adding a controller object to the project may establish a communication link between the current project and the physical device represented by the controller object. Accordingly, a user may execute the tag importer feature 318 once a controller object is added to the project to import tags from the controller represented by the controller object.

FIG. 7 is a screenshot of the IDE 300 when a user selects an option to execute the tag importer feature 318 from the explorer window 306. The user may configure the tag importer feature 318 using the properties window 308 prior to executing the tag importer feature. For example, the user may select a controller object 500 (e.g., "MELSEQStation3") within the project to import tags from via the properties window 308. The user may select the controller object 500 within the properties window 308 from a listing 502 of controller objects associated with the communication driver object 450 beneath the communication driver option 400 of the listing 314 of the explorer window 306. Further, the user may select an XML file associated with (e.g., running on, executed by) the controller represented by the controller object 500 to extract tags from via the properties window 308. For example, the user may select the "Browse" button 504 within the rows of description 326 within properties window 308 to select the XML file. When the browse button 504 is selected, the IDE 300 may open an explorer window that allows the user to locate a file to upload or import, such as an XML file stored locally (e.g., on the memory 106 of the computing device 26) or remotely (e.g., in the cloud server 30).

Additionally, the user may edit, remove, or add additional execution commands associated with the tag importer feature 318 within the rows of additional information 326 displayed within the properties window. As shown, the rows of additional information 326 may include a display name and description of each of the additional execution commands. The tag importer feature 318 may include an additional execution command entitled "DeleteMissingTags" that may cause the tag importer feature 318 to delete any previously imported tags that were generated based on variables that are no longer defined within the currently selected XML file. This additional execution command may reduce a number of conflicting tags and may keep the tags within the project up to date when the tag importer feature 318 is executed on an updated version of the XML file, such that updates to the code running on the respective controller represented by the controller object 500 are reflected within the project. The tag importer feature 318 may also include an additional execution command entitled "UpdateStructureDefinition" that may cause the tag importer feature 318 to add or delete tags based on detected differences between previously imported tags and the tags imported from the current version of the XML file. Additionally, the tag importer feature 318 may include an additional execution command entitled "CheckExternalDeviceAccessField" that may cause the tag importer feature 318 to output an indication of variables within the XML file that do not have or allow external device access which may prevent a tag from being generated. Accordingly, the properties window 308 may allow a user to further customize the tag importer feature 318 and define logic that determines how the tag importer will behave in response to conflicts between previously imported tags and updated or new tags, restricted variables within the XML file, and the like.

As shown, the IDE 300 may update to include a pop-up configuration or navigation window 506 when a user selects (e.g., clicks, right clicks, taps, etc.) the tag importer feature 318 from the listing 314 of the explorer window 306. The tag importer feature 318 may be executed on the selected XML file when the user selects the execute option 508 within the pop-up window 506. In certain embodiments, the IDE 300 may update to include a notification prompting the user to confirm that the tag importer 318 is allowed to access data stored in the XML file before executing the tag importer 318. The tag importer 318 may read the XML file in its entirety (e.g., rather than generating tags by parsing the XML file in a line-by-line fashion) and may extract variables from the XML file based on one or more industrial automation standards to import tags from the controller represented by the controller object 500. For example, the tag importer may extract variables from the XML file by comparing the contents of the file against PLCopen standards that capture similarities across common manufacturer-specific communication protocols (e.g., similar syntax, similar naming conventions, etc.) to identify variables and data structures defining relationships between variables within the XML file. Accordingly, the tag importer feature 318 may be configured to identify and extract variables from the XML file, regardless of the communication protocol or manufacturer associated with the controller represented by the controller object 500. Additionally, by reading the entire XML file at once, rather than parsing the XML file line-by-line, the tag importer feature 318 may import tags with complex data types and structures (e.g., structures and arrays of UDTs).

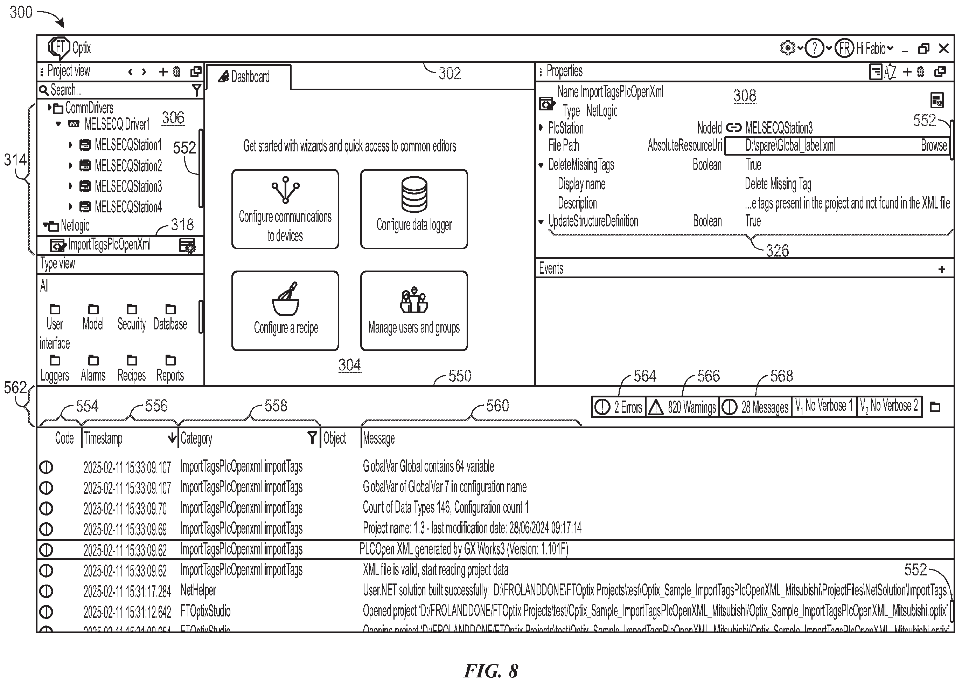

When the tag importer 318 finishes generating tags based on the selected XML file and one or more industrial automation standards (e.g., PLCopen, IEC 611313-3), the IDE 300 may update to display the imported tags. FIG. 8 is a screenshot of the IDE 300 when tags are imported and/or generated by the tag importer feature 318. As shown, once the tag importer 318 finishes importing tags from the XML file, the IDE 300 may update to include log window 550 beneath the explorer window 306, the primary window 304, and/or the properties window 308. In some embodiments, the explorer window 306 and the properties window 308 may update to become scrollable windows with scrollbars 552 that a user may move to adjust which portions of the respective windows are displayed (e.g., displaying a specific portion of the listing 314 of the explorer window 306, displaying a specific portion of the rows of additional information 326 of the properties window 308).

The log window 550 may display notifications such as messages, warnings, and alerts or errors associated with executing the tag importer 318. As shown, each entry within the log window 550 may include an indicator code 554, a timestamp 556, a category 558, and a message description 560. The indicator code 554 may include a visual indication of whether the entry corresponds to a message, a warning, or an error. For example, the indicator code 554 may be a circle around a letter "i" when the entry is a message, a yellow triangle around an exclamation point when the entry is a warning, and a red octagon around an exclamation point when the entry is an error. Thus, the indicator code 554 may have a shape and/or color indicating a level of severity of the message. The timestamp 556 may indicate a time period associated with the message (e.g., day and time, timestamp within runtime of project, etc.), such as a time associated with the event the message is describing, a time when the message was first displayed, and the like. The category 558 may indicate which feature of application generated or is associated with the entry, such as the tag importer 318. The message description 560 may provide a text summary of the event associated with the entry of the log window 550. For example, log window 550 may display an entry indicating that the XML file is valid and that the tag importer 318 started reading the project data within the XML file. Additionally, the log window 550 may display an entry indicating which communication protocol or programming language is associated with the XML file (e.g., "PLCOpen XML generated by GX Works3 (Version:1.191F)"), an entry with the project name and last modification date of the XML file, and brief descriptions of the discovered and extracted variables within the XML file. As such, a user may navigate through the log window (e.g., via scrollbar 552) to view information regarding the tag importing process.

The log window 550 may include a horizontal information bar 562 extending along the top of the log window 550 which may include an error indication 564 indicating the number of log entries corresponding to errors, a warning indication 566 indicating the number of log entries corresponding to warnings, and a message indication 568 indicating the number of log entries corresponding to messages within the log window 550. In some embodiments, the error indication 564, warning indication 566, and the message indication 568 may each selectable buttons that may allow users to toggle on and off (e.g., display or hide) the entries corresponding to the message type of the button. For example, in certain embodiments the log window 550 may default to displaying all of the messages, warnings, and errors, and thus, a user may select the warnings indication 566 and the messages indication 568 to hide the entries corresponding to warnings and messages such that only the error entries are displayed within the log window 550. Additionally, or alternatively, the log window 550 may default to displaying only the selected entry type, and thus, the user may select one or more of the error indication 564, warning indication 566, and the message indication 568 to display the selected types of entries.

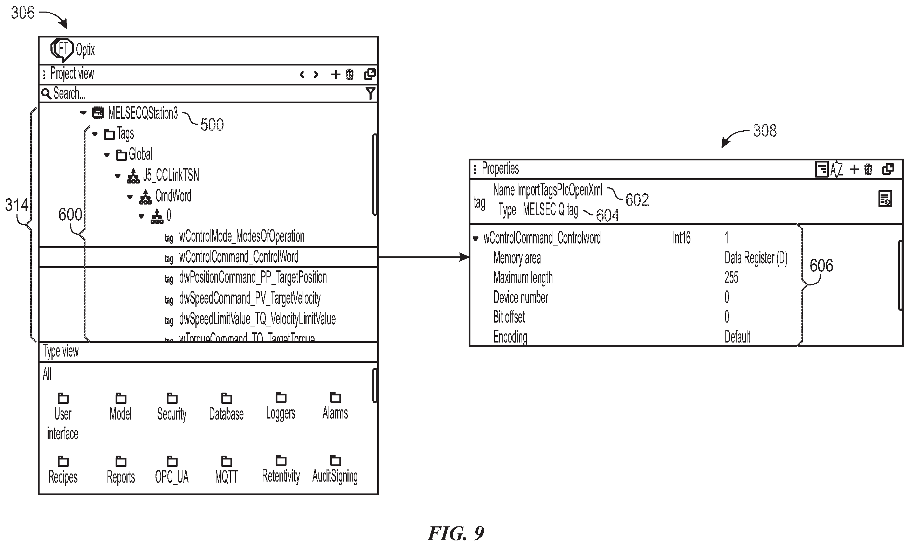

The explorer window 306 may also update to include the imported tags, as shown in FIG. 9. For example, a nested listing 600 of the generated tags may be added to the listing 314 of the explorer window 306 within a field of the listing 314 for the controller object 500 corresponding to the controller where the tags originate from. The nested listing 600 of tags may capture the structure or relationships between the tags (e.g., parent-child tags, nested tags, etc.). For example, tags that depend on other tags may be grouped in the listing as an expandable/collapsable listing beneath the tag that they depend on. When a user selects (e.g., clicks, touches, taps, etc.) a tag from the nested listings 600, the properties window 308 may update to display information regarding the selected tag. For example, the properties window may display the tag name 602 (e.g., "wControlCommand_Controlworld"), the tag type 604 (e.g., "MELSEC Q tag") which may indicate a communication protocol and/or type of controller associated with the tag, as well as a general description 606 of the tag (e.g., information regarding the formatting and/or structure of the tag such as memory area, maximum length, device number, bit offset, encoding, etc.). The user may utilize the tags within the nested listing 600 to create or modify visualizations of the industrial automation system, visualizations of processes within the industrial automation system, and/or industrial automation projects executable by one or more devices (e.g., controllers) within the industrial automation system to control one or more components within the industrial automation system to perform an industrial process.

FIG. 10 is a screenshot of the IDE 300 with the primary window 304 displaying a main window 650 for generating a user interface visualization of an industrial automation system or process. A user may cause the IDE 300 to display the main window 650 within the primary window by interacting with a user interface (UI) option 652 within the listing 314 of selectable options within the explorer window 306. As shown, the IDE 300 may update to include one or more selectable tabs 654 along a top edge of the primary window 304 to allow the user to navigate between the navigation or quick start window shown in FIG. 4 and the main window 650. The primary window may update to include one or more toolbars 656 with selectable options to build out the user interface visualization within the main window 650, such as tools to create user-defined areas within the user interface (e.g., a tool to create a rectangular user-defined area, a tool to create a round user-defined area, etc.). Additionally, the properties window 308 may update to display editable properties of the main window 650, such as a width, height, orientation, and display settings of the main window.

The user may interact with the IDE 300 to add, remove, or modify features of the user interface visualization (e.g., HMI screen) associated with the main window 650. For example, the user may interact with the IDE 300 to design a schematic of an industrial automation system that may be displayed within or on an HMI of the industrial automation system or any other computing device associated with monitoring or operating the industrial automation system. The user may define features of the user interface visualization using tags imported by the tag importer feature 318 such that the user interface visualization may display information received directly from a controller within the industrial automation system. For example, the user may define one or more properties (e.g., temperature, flowrate, pressure, speed, etc.) of an object within the user interface visualization based on or more tags corresponding to sensor measurements of the one or more properties of a device (e.g., tank, valve, motor, etc.) represented by the object. Accordingly, the user may utilize the tags to create user interface visualizations that display real-time data from the industrial automation system being visualized. The user may interact with the IDE 300 to save the custom user interface visualization (e.g., on the memory 106 of the computing device 26) and/or remotely (e.g., on the cloud server 30).

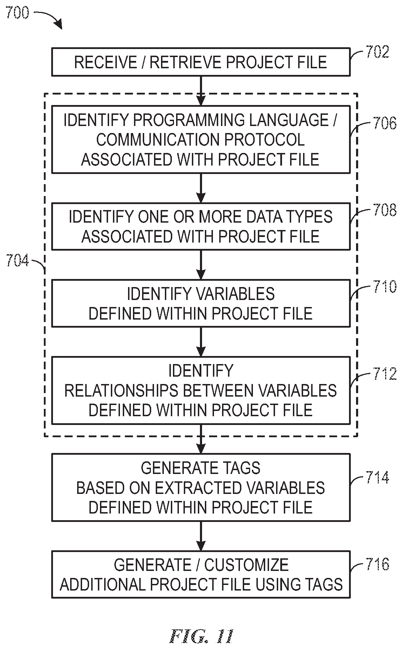

FIG. 11 is a flow chart of a process 700 for importing tags within an industrial automation software application by leveraging industrial automation standards (e.g., PLCopen standard XML, IEC 611313-3, etc.). Although the following description of the process 700 is described in a particular order, which represents a particular embodiment, it should be noted that the process 700 may be performed in any suitable order. Moreover, it should be noted that the process 700 may be performed by any suitable computing device (e.g., computing device 26, operator device 234), or a combination of computing devices, within the OT environment.

At block 702, the process 700 may receive or retrieve a project file (e.g., PLCopen standard XML file) from a component of an industrial automation system (e.g., programmable logic controller). For example, the process 700 may display the properties window 308 of the IDE 300, as shown in FIGS. 4 and 7, to prompt or allow a user to identify the component of the industrial automation system to extract tags from and select a project file associated with the component. The user may select the browse button 504 shown in FIG. 7 to open an explorer window to locate one or more project files to upload or import (e.g., from the memory 106 of the computing device 26 and/or from the cloud server 30).

At sub-process 704, the process 700 may process and extract relevant features (e.g., variables, structures, etc.) from the project file (e.g., via the tag importer feature 318 leveraging industrial automation standards). The sub-process 704 may include a collection of blocks that represent different aspects of the extraction process. The blocks shown in FIG. 11 are exemplary and the sub-process 704 may include only some of the blocks shown, may include different combinations of blocks, may include a different order of blocks, or may include additional blocks not shown in FIG. 11.

At block 706, the process 700 may identify a programming language or communication protocol associated with the project file. For example, the process 700 may execute the tag importer feature 318, as shown in FIG. 7, which may read the project file and determine the corresponding programming language or communication protocol associated with the project file based on the structure, format, metadata, or combination thereof, of the project file. As described above, certain programmable logic controllers (PLCs) may be programmed using project files generated using a manufacturer-specific programming language or code constructor, which may use manufacturer-specific or uncommon syntax, naming conventions, and the like. Accordingly, the process 700 may determine the programming language used to generate the project file to determine which industrial automation standards are applicable to the project file, which may inform how the process 700 extracts variables and structures from the project file.

At block 708, the process 700 may identify one or more data types used within the project file. For example, the process 700 may utilize the tag importer feature 318 to parse the complete project file and determine what data types are used throughout the project file. The tag importer 318 may detect a number of different data types such as REAL (e.g., for floating point numbers, such as data provided by an analog device in floating point mode), INT (e.g., for integers or whole numbers, such as data provided by an analog device in integer mode), STRING (e.g., for textual data, a string of ASCII characters), BOOL (e.g., for Boolean data, binary values, such as for bits and/or digital I/O points), COUNTER (e.g., for data provided by a counter), DINT (e.g., for larger whole number values), CONTROL (e.g., for data provided by a sequencer), TIMER (e.g., for data provided by a timer), user-defined data types (UDTs), and the like. The UDTs may include complex data, such as arrays (e.g., multiple values stored in a single variable), structured data (e.g., composites of several variables of several different data types), and the like. Accordingly, the process 700 may determine which data types are present within the project file to facilitate properly identifying and extracting variables and structures of UDTs. Identifying the data types within the project may allow the process 700 to generate tags that capture the structure of variables within the project file.

At block 710, the process 700 may identify variables defined within the project file. For example, the process 700 may utilize the tag importer feature 318 to identify variables within the project file based on one or more industrial automation standards as informed by the identified programming language and data types. The tag importer feature 318 may identify the variables by comparing the syntax and content of the project file against expected syntax defined within the one or more industrial automation systems to find delineations between variables of the project file.

At block 712, the process 700 may identify relationships between the variables discovered at block 710. For example, the process 700 may utilize the tag importer feature 318 to identify hierarchical, nested, and/or parent-child relationships between variables defined within the project file. Accordingly, the process 700 may generate tags that capture the structure, as well as individual variables, within the project file.

At block 714, the process 700 may generate tags from the project file based on the features extracted using the sub-process 704 and import the tags into any suitable application (e.g., native application, software application, application accessible via a website browser, etc.). For example, the process 700 may populate an industrial automation software application with the generated tags for use in defining and/or modifying an additional industrial automation project (e.g., processor-executable code to control one or more devices within an industrial automation system, data visualizations, user interface screens, etc.). As shown in FIG. 9, the process 700 may use the tag importer feature 318 to populate the explorer window 306 of the IDE 300 with tags. Additionally, the IDE 300 may update to include the log window 550 with messages, warnings, and errors regarding the tag generating process, as shown in FIG. 8. As such, the user may view the information extracted from the project file according to sub-process 704 and address any warnings or alerts. For example, if the tag importer feature 318 detected a missing or incomplete definition of a parameter or structure within the project file, the user may be alerted via the log window 550.

At block 716, the process 700 may generate and/or modify an additional project file using the tags generated at step 714. For example, the user may interact with a GUI (e.g., IDE 300) to generate a visualization of the industrial automation system using the imported tags such that the visualization displays or captures data associated with operations of the industrial automation system in real-time or near real-time as data is received/processed by the component associated with the tags. The user may utilize the tags to define properties of components within the visualization (e.g., objects representing industrial automation devices, controllers, routines, digital gauges, etc.) and relationships between components within the visualization (e.g., communication links between components, input/output relationships between components). For example, the user may define one or more properties (e.g., temperature, flowrate, pressure, speed, etc.) of an object within the visualization based on or more tags corresponding to sensor measurements of the one or more properties of a device (e.g., tank, valve, motor, etc.) represented by the object. Accordingly, the user may utilize the tags to create visualizations that display real-time data from the industrial automation system being visualized. The user may interact with the IDE 300 to save the custom user interface visualization (e.g., on the memory 106 of the computing device 26) and/or remotely (e.g., on the cloud server 30).

The disclosed techniques are directed towards importing and generating tags for use within industrial automation projects. Specifically, the disclosed techniques may leverage industrial automation standards (e.g., PLCopen standard, IEC 61131-3, etc.) to extract variables from an XML file associated with a component of an industrial automation system. For example, systems and methods of the present disclosure may leverage PLCopen standards that capture similarities across common manufacturer-specific programming languages (e.g., shared syntax, shared naming conventions, etc.). The systems and methods may retrieve a project file (e.g., PLCopen standard XML file) associated with a component of an industrial automation system, extract variables from the project file based on one or more industrial automation standards (e.g., PLCopen standard, IEC 61131-3, etc.), and generate tags based on the extracted variables for use within a software application associated with monitoring and/or designing the industrial automation system. Users may utilize the tags within the software application to create an industrial automation project file and/or visualization, as well as to modify existing industrial automation project files and/or visualizations. The presently disclosed techniques may allow users to import (e.g., automatically generate) tags with complex data types (e.g., user defined data types), as well as import tags from components regardless of their manufacturer. Accordingly, by leveraging industrial automation standards, the presently disclosed techniques may provide a standardized method for importing tags from industrial automation components regardless of the manufacturer and/or programming language associated with the components, while reducing operator intervention and human error within the tag generation process.

While only certain features have been illustrated and described herein, many modifications and changes will occur to those skilled in the art. It is, therefore, to be understood that the appended claims are intended to cover all such modifications and changes as fall within the true spirit of the disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for (perform)ing (a function)..." or "step for (perform)ing (a function)...", it is intended that such elements are to be interpreted under 35 U.S.C. 112(f). However, for any claims containing elements designated in any other manner, it is intended that such elements are not to be interpreted under 35 U.S.C. 112(f).
The following is a list of further preferred embodiments of the invention:
1. A non-transitory, tangible, computer readable medium comprising instructions that, when executed by processing circuitry, causes the processing circuitry to perform operations comprising:
   receiving a project file associated with a controller of an industrial automation system, wherein the controller is configured to execute the project file to control operations of one or more industrial automation components within the industrial automation system;
   extracting one or more variables from the project file based on one or more industrial automation standards;
   importing one or more tags into an industrial automation application based on the one or more variables; and
   generating, via the industrial automation application, a visualization of the industrial automation system, wherein the visualization comprises one or more objects defined using the one or more tags.
2. The computer readable medium of embodiment 1, wherein the project file comprises an XML file.
3. The computer readable medium of embodiment 1, wherein extracting the one or more variables comprises:
   identifying a programming language associated with the project file, wherein the programming language is associated with a manufacturer of the controller;
   selecting the one or more industrial automation standards based on the programming language, wherein the one or more industrial automation standards define preferences for syntax and semantics of the programming language; and
   identifying the one or more variables defined within the project file based on the one or more industrial automation standards.
4. The computer readable medium of embodiment 1, wherein the operations comprise identifying one or more data types within the project file, and wherein the one or more tags are imported into the industrial automation application based on the one or more data types.
5. The computer readable medium of embodiment 4, wherein the one or more data types comprise one or more user-defined data types (UDTs).
6. The computer readable medium of embodiment 1, wherein the operations comprise presenting the visualization within a graphical user interface (GUI).
7. The computer readable medium of embodiment 6, wherein the operations comprise modifying the visualization based on one or more user inputs received via the GUI.
8. The computer readable medium of embodiment 1, wherein the one or more variables define configuration parameters of the one or more industrial automation components.
9. The computer readable medium of embodiment 1, wherein the one or more objects are configured to automatically update in response to operations of the industrial automation system based on data from received from the controller via the one or more tags.
10. A method, comprising:
   receiving a project file configured to control one or more industrial automation devices within an industrial automation system;
   extracting one or more variables from the project file based on one or more industrial automation standards; and
   importing one or more tags into an industrial automation application based on the one or more variables, wherein the industrial automation application is configured to generate a visualization of the industrial automation system with the one or more tags.
11. The method of embodiment 10, wherein the project file comprises an XML file from a programmable logic controller (PLC).
12. The method of embodiment 10, wherein extracting the one or more variables comprises:
   identifying a programming language associated with the project file;
   identifying one or more data types within the project file;
   selecting the one or more industrial automation standards based on the programming language, the one or more data types, or both; and
   identifying the one or more variables defined within the project file based on the one or more industrial automation standards.
13. The method of embodiment 12, wherein the one or more data types comprises one or more user-defined data types (UDTs).
14. The method of embodiment 10, importing the one or more tags into the industrial automation application comprises populating an explorer window of a graphical user interface (GUI) with the one or more tags, wherein the industrial automation application is configured to generate the visualization of the industrial automation system based on user inputs received via the GUI.
15. The method of embodiment 14, wherein the explorer window of the GUI displays the one or more tags within a nested listing based on relationships between the one or more tags.
16. The method of embodiment 14, wherein the GUI comprises a log window configured to display one or more notifications based on the project file, the one or more tags, or a combination thereof.
17. The method of embodiment 16, wherein the one or more notifications comprise an indication of a name of the project file, an indication of a programming language or application associated with generating the project file, an indication of a last modification date of the project file, an indication of a number of data types within the project file, a warning indicative of missing or invalid definition of a variable of the one or more variables within the project file, an error associated with an invalid project file, or a combination thereof.
18. A non-transitory, tangible, computer readable medium comprising instructions that, when executed by processing circuitry, causes the processing circuitry to perform operations comprising:
   receiving a project file configured to control one or more industrial automation devices within an industrial automation system;
   extracting one or more variables from the project file based on one or more industrial automation standards, wherein the one or more variables are associated with configuration parameters of the one or more industrial automation devices;
   importing one or more tags into an industrial automation application based on the one or more variables; and
   generating, via a graphical user interface (GUI) associated with the industrial automation application, a visualization of the industrial automation system based on the one or more tags.
19. The computer readable medium of embodiment 18, wherein extracting the one or more variables comprises:
   identifying a programming language associated with the project file;
   identifying one or more data types within the project file;
   selecting the one or more industrial automation standards based on the programming language, the one or more data types, or both; and
   identifying the one or more variables defined within the project file based on the one or more industrial automation standards.
20. The computer readable medium of embodiment 19, wherein generating the visualization of the industrial automation system via the GUI comprises:
   receiving an indication adding one or more objects into a main window of the GUI, wherein the one or more objects represent the one or more industrial automation devices within the industrial automation system; and
   defining one or more parameters of the one or more objects using the one or more tags, wherein the parameters of the one or more objects are configured to automatically update in response to operations of the industrial automation system based on runtime data of the industrial automation system captured via the one or more tags.

## Claims

1. A non-transitory, tangible, computer readable medium comprising instructions that, when executed by processing circuitry, causes the processing circuitry to perform operations comprising:
receiving a project file associated with a controller of an industrial automation system, wherein the controller is configured to execute the project file to control operations of one or more industrial automation components within the industrial automation system;
extracting one or more variables from the project file based on one or more industrial automation standards;
importing one or more tags into an industrial automation application based on the one or more variables; and
generating, via the industrial automation application, a visualization of the industrial automation system, wherein the visualization comprises one or more objects defined using the one or more tags.

2. The computer readable medium of claim 1, wherein the project file comprises an XML file.

3. The computer readable medium of one of claims 1 or 2, wherein extracting the one or more variables comprises:
identifying a programming language associated with the project file, wherein the programming language is associated with a manufacturer of the controller;
selecting the one or more industrial automation standards based on the programming language, wherein the one or more industrial automation standards define preferences for syntax and semantics of the programming language; and
identifying the one or more variables defined within the project file based on the one or more industrial automation standards.

4. The computer readable medium of one of claims 1 to 3, wherein the operations comprise identifying one or more data types within the project file, and wherein the one or more tags are imported into the industrial automation application based on the one or more data types.

5. The computer readable medium of claim 4, wherein the one or more data types comprise one or more user-defined data types (UDTs).

6. The computer readable medium of one of claims 1 to 5, wherein the operations comprise presenting the visualization within a graphical user interface (GUI), and/or
wherein the operations comprise modifying the visualization based on one or more user inputs received via the GUI.

7. The computer readable medium of one of claims 1 to 6, wherein the one or more variables define configuration parameters of the one or more industrial automation components.

8. The computer readable medium of one of claims 1 to 7, wherein the one or more objects are configured to automatically update in response to operations of the industrial automation system based on data from received from the controller via the one or more tags.

9. A method, comprising:
receiving a project file configured to control one or more industrial automation devices within an industrial automation system;
extracting one or more variables from the project file based on one or more industrial automation standards; and
importing one or more tags into an industrial automation application based on the one or more variables, wherein the industrial automation application is configured to generate a visualization of the industrial automation system with the one or more tags.

10. The method of claim 9, wherein the project file comprises an XML file from a programmable logic controller (PLC).

11. The method of one of claims 9 or 10, wherein extracting the one or more variables comprises:
identifying a programming language associated with the project file;
identifying one or more data types within the project file;
selecting the one or more industrial automation standards based on the programming language, the one or more data types, or both; and
identifying the one or more variables defined within the project file based on the one or more industrial automation standards, and/or
wherein the one or more data types comprises one or more user-defined data types (UDTs).

12. The method of one of claims 9 to 11, importing the one or more tags into the industrial automation application comprises populating an explorer window of a graphical user interface (GUI) with the one or more tags, wherein the industrial automation application is configured to generate the visualization of the industrial automation system based on user inputs received via the GUI, and/or
wherein the explorer window of the GUI displays the one or more tags within a nested listing based on relationships between the one or more tags.

13. The method of claim 12, wherein the GUI comprises a log window configured to display one or more notifications based on the project file, the one or more tags, or a combination thereof, and/or
wherein the one or more notifications comprise an indication of a name of the project file, an indication of a programming language or application associated with generating the project file, an indication of a last modification date of the project file, an indication of a number of data types within the project file, a warning indicative of missing or invalid definition of a variable of the one or more variables within the project file, an error associated with an invalid project file, or a combination thereof.

14. A non-transitory, tangible, computer readable medium comprising instructions that, when executed by processing circuitry, causes the processing circuitry to perform operations comprising:
receiving a project file configured to control one or more industrial automation devices within an industrial automation system;
extracting one or more variables from the project file based on one or more industrial automation standards, wherein the one or more variables are associated with configuration parameters of the one or more industrial automation devices;
importing one or more tags into an industrial automation application based on the one or more variables; and
generating, via a graphical user interface (GUI) associated with the industrial automation application, a visualization of the industrial automation system based on the one or more tags.

15. The computer readable medium of claim 14, wherein extracting the one or more variables comprises:
identifying a programming language associated with the project file;
identifying one or more data types within the project file;
selecting the one or more industrial automation standards based on the programming language, the one or more data types, or both; and
identifying the one or more variables defined within the project file based on the one or more industrial automation standards, and/or
wherein generating the visualization of the industrial automation system via the GUI comprises:
receiving an indication adding one or more objects into a main window of the GUI, wherein the one or more objects represent the one or more industrial automation devices within the industrial automation system; and
defining one or more parameters of the one or more objects using the one or more tags, wherein the parameters of the one or more objects are configured to automatically update in response to operations of the industrial automation system based on runtime data of the industrial automation system captured via the one or more tags.
